# FASCICULE DE BREVET EUROPEEN

(11) **EP 4 136 325 B1**
(45) Date de publication et mention de la délivrance du brevet: **04.06.2025**
(21) Numéro de dépôt: 21726151.0
(22) Date de dépôt: 12.04.2021
(51) Int. Cl.: F01D 5/28, B29C 65/00, B29D 99/00, B29C 70/24, B29C 70/48, B29C 70/86, B29L 31/08, B29B 11/16

(54) **AUBE EN MATÉRIAU COMPOSITE COMPORTANT DES RENFORTS MÉTALLIQUES, ET PROCÉDÉ DE FABRICATION D'UNE TELLE AUBE**
SCHAUFEL AUS VERBUNDWERKSTOFF MIT METALLVERSTÄRKUNGEN UND VERFAHREN ZUR HERSTELLUNG EINER SOLCHEN SCHAUFEL
BLADE MADE OF COMPOSITE MATERIAL WITH METAL REINFORCEMENTS, AND METHOD OF MANUFACTURING SUCH A BLADE

(30) Priorité: 14.04.2020 FR 2003729
(43) Date de publication de la demande: 22.02.2023
(73) Titulaire: SAFRAN, 75015 Paris (FR)
(72) Inventeur: IGLESIAS CANO, Célia, 77550 MOISSY-CRAMAYEL (FR); MASSON, Antoine Hubert Marie Jean, 77550 MOISSY-CRAMAYEL (FR); OBERT, Enrico Giovanni, 77550 MOISSY-CRAMAYEL (FR)
(74) Mandataire: Gevers & Orès
(86) Numéro de dépôt international: PCT/FR2021/050642
(87) Numéro de publication internationale: WO 2021/209709

(56) Documents cités:
- WO-A1-2018/158544
- WO-A2-2013/060977
- FR-A1- 3 079 445
- US-A1- 2013 052 030

## Description

### DOMAINE TECHNIQUE

L'invention se rapporte au domaine des aubes en matériau composite pour une turbomachine, notamment d'aéronef, et plus précisément à l'amélioration de la tenue mécanique d'une telle aube en matériau composite.

### TECHNIQUE ANTÉRIEURE

L'état de la technique comporte notamment les documents WO 2013/060977 A2, FR 3 079 445 A1, WO 2018/158544 A1 et US 2013/052030 A1.

De façon connue, des aubes directrices de flux de sortie (OGV, acronyme de l'expression anglaise « *Outlet Guide Vane* ») sont utilisées en aéronautique. Un OGV est un aubage fixe dont la fonction consiste à redresser le flux à la sortie d'une aube de soufflante dans le flux secondaire d'une turbomachine.

Les OGV forment des rangées d'aubes fixes qui permettent de guider le flux traversant la turbomachine, selon une vitesse et un angle appropriés.

Par convention, dans la présente demande, les termes « amont » et « aval » sont définis par rapport au sens de circulation de l'air dans la turbomachine. De même, par convention dans la présente demande, les termes « intérieur » et « extérieur » ou « interne » et « externe » sont définis radialement par rapport à l'axe de la turbomachine.

Les OGV peuvent être métalliques, ou bien en matériau composite, notamment pour en diminuer la masse.

Actuellement, les OGV composites sont réalisées par injection de résine époxy, par exemple par moulage par injection de résine liquide (RTM, acronyme de l'expression anglaise « *Resin Transfert Molding* »), dans une préforme en fibres de carbone tissée en trois dimensions (3D).

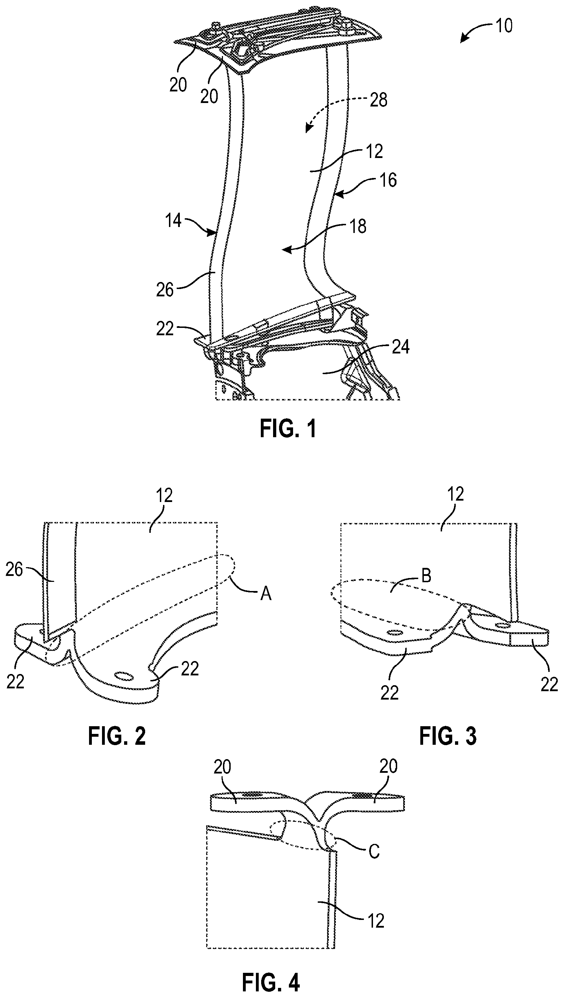

La figure 1 représente un OGV 10 qui comporte une pale 12 ayant une face intrados 18 et une face extrados 28 s'étendant entre un bord d'attaque 14 et un bord de fuite 16, et dont les extrémités longitudinales sont reliées à des plateformes : des plateformes inter-OGV 20 rapportées sur l'extrémité radiale extérieure de l'aubage, et qui sont agencées entre ladite OGV et les OGV adjacentes, et une plateforme 22 rapportée sur une extrémité radiale intérieure de l'aubage, et reliée au moyeu 24 du redresseur de flux.

Un renfort métallique 26, sous la forme d'un clinquant métallique, par exemple en Nickel-Cobalt, est co-injecté sur la partie du bord d'attaque 14 de la pale 12. Les matériaux composites présentant une sensibilité à certaines contraintes mécaniques, le renfort métallique permet avantageusement de protéger de l'érosion et des potentiels impacts l'OGV.

Il est également connu un OGV composite présentant une architecture hybride avec une tresse en matériau carbone pour la réalisation de la zone aérodynamique et une résine thermoplastique (avec ou sans charge) pour former l'âme de l'OGV.

Toutefois, cet OGV présente des propriétés mécaniques moindres, plus faibles qu'une armure classique.

De plus, la résine thermoplastique ne fait que combler la cavité entre les plateformes de fixation de l'aube, et ne permet donc pas de limiter l'ouverture des plateformes, ce qui diminuerait les contraintes mécaniques subies par l'OGV.

Des études ont été réalisées pour analyser la tenue mécanique de cet OGV. D'après les résultats d'un modèle à éléments finis, une concentration systématique de contraintes se trouve au niveau des congés, représentés en pointillés A, B et C respectivement sur les figures 2, 3 et 4, c'est-à-dire au niveau de la jonction, entre les plateformes 20, 22 et la pale 12.

Des expertises des pièces suite à des essais de traction, de compression et de flexion ont également été réalisées. Les calculs montrent des zones de rupture identiques à celles relevées par l'expertise des essais.

Il existe donc un besoin d'un OGV, dans lequel les contraintes dans ces zones de rupture sont diminuées, et dans lequel les efforts sont mieux répartis. L'invention a pour objectif de proposer une solution permettant de remédier à au moins certains de ces inconvénients.

### RÉSUMÉ DE L'INVENTION

L'invention permet une limitation de l'ouverture des plateformes d'une aube en matériau composite pour une turbomachine, pour une diminution des contraintes dans les congés de raccordement (zones critiques) entre la pale et les plateformes.

À cet effet, l'invention concerne un procédé de fabrication d'un redresseur de flux en matériau composite pour une turbomachine, notamment d'aéronef, comprenant les étapes :
- de tissage de fibres en trois dimensions de sorte à réaliser une préforme fibreuse,
- de montage de la préforme fibreuse dans un moule,
- d'injection, dans le moule, d'une résine, afin d'imprégner la préforme fibreuse,
- de polymérisation de la résine de manière à former l'aube, ladite aube comprenant une pale ayant une face intrados et une face extrados s'étendant entre un bord d'attaque et un bord de fuite, une extrémité longitudinale de ladite pale étant reliée à une plateforme, la plateforme comportant des portions intrados et extrados reliées à ladite pale par un congé de raccordement, et une déliaison étant formée dans ladite préforme fibreuse entre lesdites portions intrados et extrados de la plateforme,
- de renfort du bord d'attaque de ladite pale, par intégration d'un premier renfort métallique sur le bord d'attaque de la pale,
caractérisé en ce que le procédé comprend également l'étape :
- de renfort des congés de raccordement, par l'intégration d'un deuxième renfort métallique sur au moins une partie des portions intrados et extrados de la plateforme et dans la déliaison.

Selon un mode de réalisation, l'étape d'ajout du deuxième renfort métallique consiste en un collage du deuxième renfort métallique sur au moins une partie des portions intrados et extrados de la plateforme et dans la déliaison.

Selon un autre mode de réalisation, l'étape d'ajout du deuxième renfort métallique consiste en une co-injection du deuxième renfort métallique sur au moins une partie des portions intrados et extrados de la plateforme et dans la déliaison.

L'invention concerne également une aube en matériau composite pour une turbomachine, notamment d'aéronef, 1. selon la revendication 4. Ainsi, cette aube comprend un deuxième renfort métallique agencé sur au moins une partie des portions intrados et extrados de la plateforme et dans la déliaison.

L'invention permet avantageusement une diminution des contraintes dans le congé de raccordement, c'est-à-dire dans la zone critique, entre la pale et la plateforme, pour assurer une robustesse mécanique.

Avantageusement, le deuxième renfort métallique permet de servir de liaison entre les portions intrados et extrados de la plateforme, et permet ainsi de renforcer la zone critique. Dans le cadre d'une co-injection, ce renfort métallique améliore nettement la formation correcte les rayons de l'OGV notamment par rapport à une tresse en carbone qui n'est pas rigide et n'a pas la forme exacte de la cavité.

Le deuxième renfort métallique permet avantageusement de limiter l'ouverture des portions intrados et extrados de la plateforme, en diminuant les contraintes au niveau du congé de raccordement sous sollicitation de traction, de compression et de flexion. De plus, le deuxième renfort métallique permet de reprendre les efforts du congé de raccordement, et, notamment pour la compression, de répartir, sur toute la base des plateformes, les efforts, ce qui augmente l'effort critique en flambage.

Selon un mode de réalisation, une dimension du deuxième renfort métallique dans une direction longitudinale aux faces intrados et extrados de la pale entre les bords d'attaque et de fuite est sensiblement égale à une dimension de la plateforme dans ladite direction. Autrement dit, le deuxième renfort métallique s'étend sur toute la longueur de la plateforme.

Selon un autre mode de réalisation, le deuxième renfort métallique comporte deux parties, chaque partie du deuxième renfort métallique ayant une dimension dans une direction longitudinale aux faces intrados et extrados de la pale entre les bords d'attaque et de fuite comprise entre 15 % et 35 % d'une corde à l'extrémité longitudinale de la pale avant le congé de raccordement. Autrement dit, le deuxième renfort métallique s'étend uniquement sur une partie de la longueur de la plateforme.

Ceci permet avantageusement de diminuer la masse de l'aube de redresseur de flux, notamment en allégeant le deuxième renfort métallique.

Une dimension du deuxième renfort métallique selon la direction longitudinale de la pale peut être comprise entre 30 % et 70 % d'une dimension de la plateforme selon ladite direction. Autrement dit, l'épaisseur du deuxième renfort métallique est comprise entre 30 % et 70 % de l'épaisseur de la plateforme.

De préférence, la dimension du deuxième renfort métallique selon la direction longitudinale de la pale est sensiblement égale à 50 % de la dimension de la plateforme selon cette direction.

Une dimension du deuxième renfort métallique dans une direction orthogonale à la direction longitudinale de la pale et à la direction longitudinale aux faces intrados et extrados de la pale entre les bords d'attaque et de fuite peut être au moins égale à une dimension de la plateforme dans ladite direction. Autrement dit, la largeur du deuxième renfort métallique est au moins égale à la largeur de la plateforme.

Selon un mode de réalisation, la plateforme est une plateforme radialement interne au redresseur par rapport à un axe dudit redresseur. Dans ce mode de réalisation, le deuxième renfort métallique comporte, à une extrémité longitudinale en regard du bord de fuite de la pale, une excroissance s'étendant orthogonalement à cette plateforme. Cette excroissance permet d'intégrer au deuxième renfort métallique une fonction de portée conique.

Selon un mode de réalisation, le deuxième renfort métallique est réalisé en titane. De préférence, le deuxième renfort métallique est réalisé en un matériau métallique compatible avec le matériau composite de l'aube de redresseur de flux, c'est-à-dire avec un matériau qui ne présente pas d'incompatibilités avec ce matériau composite.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1, déjà décrite, représente un OGV selon l'art antérieur,
[Fig. 2] la figure 2, déjà décrite, représente une partie inférieure extrados/intrados amont d'un OGV selon l'art antérieur,
[Fig. 3] la figure 3, déjà décrite, représente une partie inférieure extrados/intrados aval d'un OGV selon l'art antérieur,
[Fig. 4] la figure 4, déjà décrite, représente une partie supérieure extrados/intrados aval d'un OGV selon l'art antérieur,
[Fig. 5] la figure 5 représente une partie inférieure d'une aube selon un mode de réalisation de l'invention,
[Fig. 6] la figure 6 représente une partie supérieure d'une aube selon un mode de réalisation de l'invention,
[Fig. 7] la figure 7 représente une partie inférieure d'une aube selon un autre mode de réalisation de l'invention,
[Fig. 8] la figure 8 représente une partie inférieure d'une aube selon encore un autre mode de réalisation de l'invention, et
[Fig. 9] la figure 9 est un organigramme d'un procédé de fabrication d'une aube selon l'invention.

Les éléments ayant les mêmes fonctions dans les différentes mises en œuvre ont les mêmes références dans les figures.

### DESCRIPTION DES MODES DE RÉALISATION

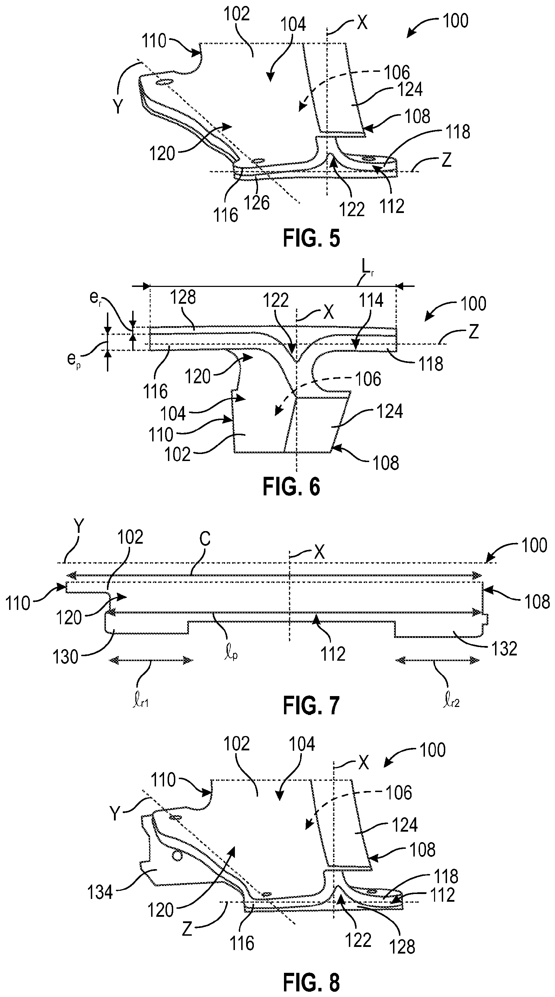

Les figures 5 à 8 représentent des aubes 100 en matériau composite pour une turbomachine d'aéronef, par exemple des OGV. L'invention s'applique également à des aubes en matériau composite pour une soufflante non carénée notamment d'aéronef, connue sous les acronymes anglais « propfan » ou « open rotor ».

L'aube 100 selon l'invention, et plus précisément la pale 102 est réalisée à partir d'une préforme fibreuse, par exemple en fibres de carbone, résultant d'un tissage en 3D. La préforme est tissée d'une seule pièce. La préforme est ensuite moulée avec de la résine, par exemple de la résine époxy.

L'aube 100 comporte une pale 102 à profil aérodynamique, de forme allongée, ayant une face intrados 104 et une face extrados 106 s'étendant entre un bord d'attaque 108 et un bord de fuite 110 opposé au bord d'attaque. Autrement dit, la pale 102 est latéralement délimitée par la face intrados 104 et la face extrados 106 qui relient le bord d'attaque 108 et le bord de fuite 110. Le bord d'attaque 108 est disposé en amont suivant le sens d'écoulement des gaz dans la turbomachine. Les faces intrados 104 et extrados 106 sont incurvées, et respectivement concave et convexe. La pale 102 s'étend longitudinalement selon l'axe X, représenté sur les figures 5 à 8.

Une première extrémité longitudinale de la pale 102 est reliée à une première plateforme 112, et une seconde extrémité longitudinale de la pale 102 est reliée à une seconde plateforme 114. Par exemple, sur les figures 5, 7 et 8, l'extrémité longitudinale inférieure de la pale 102 est reliée à une plateforme 112 radialement interne, et sur la figure 6, l'extrémité longitudinale supérieure de la pale 102 est reliée à une plateforme 114 radialement externe. Autrement dit, la pale 102 est délimitée radialement entre une plateforme 112 interne et une plateforme 114 externe. Les plateformes 112, 114 s'étendent orthogonalement à la direction longitudinale de la pale 102, c'est-à-dire à l'axe X. Comme représenté sur les figures 5 à 8, les plateformes 112, 114 s'étendent selon une direction longitudinale aux faces intrados 104 et extrados 106 de la pale 102 entre les bords d'attaque 108 et de fuite 110, représentée par l'axe Y, dite direction longitudinale de la plateforme, et selon une direction orthogonale à la direction longitudinale de la pale 102 (axe X) et à la direction longitudinale de la plateforme (axe Y), représentée par l'axe Z, dite direction radiale, ou largeur, de la plateforme.

Chaque plateforme 112, 114 comporte une portion intrados 116 et une portion extrados 118. Les portions intrados 116 et extrados 118 sont reliées à la pale 102 par un congé de raccordement 120. En particulier, une déliaison 122 est formée dans la préforme fibreuse formant l'aube, entre les portions intrados 116 et extrados 118 de la plateforme 112, 114.

L'aube 100 comporte également un renfort métallique 124, sous la forme d'un clinquant métallique, rapporté sur le bord d'attaque 108 de la pale 102. Le renfort métallique 124 peut être réalisé en Nickel-Cobalt, ou en tout autre matériau métallique compatible avec le matériau composite de l'aube 100. Ce renfort métallique 124 permet avantageusement d'améliorer la tenue mécanique de l'aube 100.

Comme représenté sur la figure 5, l'aube 100 comporte également un renfort métallique 126 agencé sur au moins une partie des portions intrados 116 et extrados 118 de la plateforme 112 et dans la déliaison 122. Ce renfort métallique 126 permet de renforcer la liaison entre la pale 102 et la plateforme 112, et donc de diminuer les contraintes dans le congé de raccordement 120, ce qui permet d'améliorer la robustesse mécanique de l'aube 100.

Comme représenté sur la figure 6, l'aube 100 comporte également un renfort métallique 128 agencé sur au moins une partie des portions intrados 116 et extrados 118 de la plateforme 114 et dans la déliaison 122. De même que le renfort métallique 126, ce renfort métallique 128 permet de renforcer la liaison entre la pale 102 et la plateforme 114, et donc de diminuer les contraintes dans le congé de raccordement 120, ce qui permet d'améliorer la robustesse mécanique de l'aube 100.

Les renforts métalliques 126, 128 peuvent être réalisés en titane, ou en tout autre matériau métallique compatible avec le matériau composite de l'aube 100.

Les renforts métalliques 126, 128 s'étendent selon la direction longitudinale de la plateforme (axe Y), et selon la direction radiale de la plateforme (axe Z).

Le renfort métallique 128 peut s'étendre sur toute la longueur Ip (axe Y) de la plateforme 112, 114. Dans ce cas, la dimension du renfort métallique 128 dans la direction longitudinale de la plateforme (axe Y) est sensiblement égale à la longueur Ip de la plateforme 112, 114.

En variante représentée en figure 7, afin de diminuer la masse de l'aube 100, le renfort métallique 128 peut s'étendre sur une partie seulement de la longueur (axe Y) de la plateforme 112, 114. Dans ce cas, le renfort métallique peut comporter une première partie 130 et une deuxième partie 132. Chaque partie 130, 132 du renfort métallique a une dimension dans la direction longitudinale de la plateforme (axe Y) comprise entre 15 % et 35 % d'une corde C à l'extrémité longitudinale de la pale 102 avant le congé de raccordement 120. La corde C correspond à la dimension de la pale 102, le long de la face intrados ou de la face extrados, entre les bords d'attaque et de fuite, au niveau d'une extrémité de la pale 102, à proximité du congé de raccordement 120. Comme représenté sur la figure 7, la longueur Ir1 de la partie 130 du renfort métallique est comprise entre 15 % et 35 % de la corde C, et la longueur Ir2 de la partie 132 du renfort métallique est comprise entre 15 % et 35 % de la corde C. La somme des longueurs Ir1 et Ir2 des parties 130, 132 du renfort métallique est inférieure à la longueur Ip de la plateforme 112. Ici, la longueur de la corde C est supérieure à la longueur Ip de la plateforme 112.

Comme représenté sur la figure 6, la dimension du renfort métallique 128 dans la direction longitudinale de la pale 102 (axe X), c'est-à-dire l'épaisseur er du renfort métallique 128, peut être comprise entre 30 % et 70 %, en fonction de la sollicitation, de préférence aux alentours de 50 %, de l'épaisseur ep de la plateforme 114.

La dimension radiale Lr (axe Z), c'est-à-dire la largeur, du renfort métallique 128 peut être au moins égale à la dimension radiale de la plateforme 114. Ainsi, le renfort métallique 128 couvre la totalité de la base des plateformes 112, 114 et arrive jusqu'à la déliaison 122. Le renfort métallique couvre ainsi au minimum le contour de toute la plateforme 112, 114.

Comme représenté en figure 8, le renfort métallique 128 comporte, à une extrémité longitudinale en regard du bord de fuite 110 de la pale 102, une excroissance 134, qui s'étend orthogonalement à la plateforme 112. L'excroissance 134 a une fonction de portée conique. Ainsi, ce renfort métallique 128 peut faire passer l'aube 100 en portée conique.

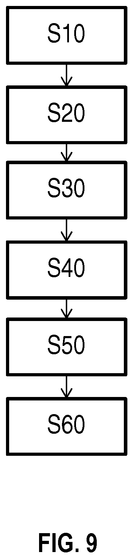

Le procédé de fabrication de l'aube précédemment décrite est représenté en figure 9. Le procédé de fabrication comprend une étape S10 de tissage de fibres en 3D de sorte à réaliser la préforme fibreuse, puis une étape S20 de montage de la préforme fibreuse dans un moule, puis une étape S30 d'injection, dans le moule, de la résine, afin d'imprégner la préforme fibreuse, et enfin une étape S40 de polymérisation de la résine de manière à former l'aube.

Afin d'augmenter la robustesse mécanique de l'aube 100, le procédé de fabrication comprend une étape S50 de renfort du bord d'attaque 108 de la pale 102, par intégration du renfort métallique 124 sur le bord d'attaque 108. Le renfort métallique 124 peut être co-injecté sur le bord d'attaque 108 de la pale 102. En variante, le renfort métallique 124 peut être collé sur le bord d'attaque 108 de la pale 102.

Afin de réduire les contraintes au niveau des congés de raccordement 120 entre la pale 102 et les plateformes 112, 114 de l'aube 100 en matériau composite, le procédé de fabrication comprend une étape S60 de renfort des congés de raccordement 120, par intégration de deuxièmes renforts métalliques 126, 128, 130, 132 sur au moins une partie des portions intrados 108 et extrados 110 des plateformes 112, 114 et dans les déliaisons 122. Le renfort métallique 126, 128 peut être co-injecté sur au moins une partie des portions intrados 108 et extrados 110 des plateformes 112, 114 et dans les déliaisons 122. En variante, le renfort métallique 126, 128 peut être collé sur au moins une partie des portions intrados 108 et extrados 110 des plateformes 112, 114 et dans les déliaisons 122.

## Revendications

1. Procédé de fabrication d'une aube (100) en matériau composite pour une turbomachine, notamment d'aéronef, comprenant les étapes :
- de tissage (S10) de fibres en trois dimensions de sorte à réaliser une préforme fibreuse,
- de montage (S20) de la préforme fibreuse dans un moule,
- d'injection (S30), dans le moule, d'une résine, afin d'imprégner la préforme fibreuse,
- de polymérisation (S40) de la résine de manière à former l'aube (100), ladite aube comprenant une pale (102) ayant une face intrados (104) et une face extrados (106) s'étendant entre un bord d'attaque (108) et un bord de fuite (110), une extrémité longitudinale de ladite pale étant reliée à une plateforme (112, 114), la plateforme comportant des portions intrados (116) et extrados (118) reliées à ladite pale par un congé de raccordement (120), et une déliaison (122) étant formée dans ladite préforme fibreuse entre lesdites portions intrados et extrados de la plateforme,
- de renfort (S50) du bord d'attaque de ladite pale, par intégration d'un premier renfort métallique (124) sur le bord d'attaque de la pale,
**caractérisé en ce que** le procédé comprend également l'étape:
- de renfort (S60) des congés de raccordement, par intégration d'un deuxième renfort métallique (126, 128, 130, 132) sur au moins une partie des portions intrados et extrados de la plateforme et dans la déliaison.

2. Procédé de fabrication selon la revendication 1, dans lequel l'étape d'ajout du deuxième renfort métallique (126, 128, 130, 132) consiste en un collage du deuxième renfort métallique sur au moins une partie des portions intrados (116) et extrados (118) de la plateforme et dans la déliaison (122).

3. Procédé de fabrication selon la revendication 1, dans lequel l'étape d'ajout du deuxième renfort métallique (126, 128, 130, 132) consiste en une co-injection du deuxième renfort métallique sur au moins une partie des portions intrados (116) et extrados (118) de la plateforme et dans la déliaison (122).

4. Aube (100) en matériau composite pour une turbomachine, notamment d'aéronef, comprenant une pale (102) ayant une face intrados (104) et une face extrados (106) s'étendant entre un bord d'attaque (108) et un bord de fuite (110), la pale étant réalisée à partir d'une préforme fibreuse tissée en trois dimensions, une extrémité longitudinale de ladite pale étant reliée à une plateforme (112, 114), la plateforme comportant des portions intrados (116) et extrados (118) reliées à ladite pale par un congé de raccordement (120), une déliaison (122) étant formée dans ladite préforme fibreuse entre lesdites portions intrados et extrados de la plateforme, l'aube comportant un premier renfort métallique (124) sur le bord d'attaque (108) de la pale (102),
l'aube étant **caractérisée en ce qu'**elle comprend un deuxième renfort métallique (126, 128, 130, 132) agencé sur au moins une partie des portions intrados (116) et extrados (118) de la plateforme (112) et dans la déliaison (122).

5. Aube (100) en matériau composite selon la revendication 4, dans laquelle une dimension du deuxième renfort métallique (126, 128) dans une direction longitudinale (Y) aux faces intrados (104) et extrados (106) de la pale (102) entre les bords d'attaque (108) et de fuite (110) est sensiblement égale à une dimension (Ip) de la plateforme (112, 114) dans ladite direction.

6. Aube (100) en matériau composite selon la revendication 4, dans laquelle le deuxième renfort métallique comporte deux parties (130, 132), chaque partie du deuxième renfort métallique ayant une dimension (Ir1, Ir2) dans une direction longitudinale (Y) aux faces intrados (104) et extrados (106) de la pale (102) entre les bords d'attaque (108) et de fuite (110) comprise entre 15 % et 35 % d'une corde (C) à l'extrémité longitudinale de la pale avant le congé de raccordement (120).

7. Aube (100) en matériau composite selon l'une des revendications 4 à 6, dans laquelle une dimension (er) du deuxième renfort métallique (126, 128, 130, 132) selon la direction longitudinale (X) de la pale (102) est comprise entre 30 % et 70 % d'une dimension (ep) de la plateforme (112, 114) selon ladite direction.

8. Aube (100) en matériau composite selon l'une des revendications 4 à 7, dans laquelle une dimension (Lr) du deuxième renfort métallique (126, 128, 130, 132) dans une direction orthogonale à la direction longitudinale (X) de la pale (102) et à la direction longitudinale (Y) aux faces intrados (104) et extrados (106) de la pale entre les bords d'attaque (108) et de fuite (110) est au moins égale à une dimension de la plateforme (112, 114) dans ladite direction.

9. Aube (100) en matériau composite selon l'une des revendications 4 à 8, dans laquelle la plateforme (112) est une plateforme radialement interne au redresseur par rapport à un axe dudit redresseur, et dans laquelle le deuxième renfort métallique (128) comporte, à une extrémité longitudinale en regard du bord de fuite (110) de la pale (102), une excroissance (134) s'étendant orthogonalement à ladite plateforme.

10. Aube (100) en matériau composite selon l'une des revendications 4 à 9, dans laquelle le deuxième renfort métallique (126, 128, 130, 132) est réalisé en titane.

## Patentansprüche

1. Verfahren zur Herstellung einer Schaufel (100) aus Verbundmaterial für ein Turbotriebwerk, insbesondere für ein Luftfahrzeug, umfassend die Schritte:
- Weben (S10) von Fasern in drei Dimensionen, sodass eine faserige Vorform gefertigt wird,
- Einbau (S20) der faserigen Vorform in eine Form,
- Einspritzung (S30) eines Harzes in die Form, um die faserige Vorform zu imprägnieren,
- Polymerisation (S40) des Harzes, um eine Schaufel (100) zu bilden, wobei die Schaufel ein Blatt (102) mit einer Innenfläche (104) und einer Außenfläche (106) umfasst, das sich zwischen einer Anströmkante (108) und einer Abströmkante (110) erstreckt, wobei ein Längsende des Blatts mit einer Plattform (112, 114) verbunden ist, wobei die Plattform Innenflächen- (116) und Außenflächenabschnitte (118), die mit dem Blatt durch eine Anschlussausrundung (120) verbunden sind, und eine Entbindung (122) umfasst, die in der faserigen Vorform zwischen den Innenflächen- und Außenflächenabschnitten der Plattform gebildet ist,
- Verstärkung (S50) der Anströmkante des Blatts durch Integration einer ersten metallischen Verstärkung (124) auf der Anströmkante des Blatts,
**dadurch gekennzeichnet, dass** das Verfahren gleichfalls den folgenden Schritt umfasst:
- Verstärkung (S60) der Anschlussausrundungen durch Integration einer zweiten metallischen Verstärkung (126, 128, 130, 132) auf mindestens einem Teil der Innenflächen- und Außenflächenabschnitte der Plattform und in die Entbindung.

2. Verfahren zur Herstellung nach Anspruch 1, wobei der Schritt des Hinzufügens der zweiten metallischen Verstärkung (126, 128, 130, 132) aus einer Verklebung der zweiten metallischen Verstärkung auf mindestens einen Teil der Innenflächen- (116) und Außenflächenabschnitte (118) der Plattform und in die Entbindung besteht.

3. Verfahren zur Herstellung nach Anspruch 1, wobei der Schritt des Hinzufügens der zweiten metallischen Verstärkung (126, 128, 130, 132) aus einer Co-Einspritzung der zweiten metallischen Verstärkung auf mindestens einen Teil der Innenflächen- (116) und Außenflächenabschnitte (118) der Plattform und in die Entbindung besteht.

4. Schaufel (100) aus Verbundmaterial für ein Turbotriebwerk, insbesondere eines Luftfahrzeugs, umfassend ein Blatt (102) mit einer Innenfläche (104) und einer Außenfläche (106), das sich zwischen einer Anströmkante (108) und einer Abströmkante (110) erstreckt, wobei das Blatt ausgehend von einer in drei Dimensionen gewebten faserigen Vorform gefertigt ist, wobei ein Längsende des Blatts mit einer Plattform (112, 114) verbunden ist, wobei die Plattform Innenflächen- (116) und Außenflächenabschnitte (118), die mit dem Blatt durch eine Anschlussausrundung (120) verbunden sind, umfasst, wobei eine Entbindung (122) in der faserigen Vorform zwischen den Innenflächen- und Außenflächenabschnitte der Plattform gebildet ist, wobei die Schaufel eine erste metallische Verstärkung (124) auf der Anströmkante (108) des Blatts (102) umfasst,
wobei die Schaufel **dadurch gekennzeichnet ist, dass** sie eine zweite metallische Verstärkung (126, 128, 130, 132) umfasst, die auf mindestens einem Teil der Innenflächen- (116) und Außenflächenabschnitte (118) der Plattform (112) und in der Entbindung (122) angeordnet ist.

5. Schaufel (100) aus Verbundmaterial nach Anspruch 4, wobei eine Dimension der zweiten metallischen Verstärkung (126, 128) in einer Längsrichtung (Y) an den Innenflächen (104) und Außenflächen (106) des Blatts (102) zwischen der Anström- (108) und Abströmkante (110) im Wesentlichen gleich einer Dimension (Ip) der Plattform (112,114) in der Richtung ist.

6. Schaufel (100) aus Verbundmaterial nach Anspruch 4, wobei die zweite metallische Verstärkung zwei Teile (130, 132) umfasst, wobei jeder Teil der zweiten metallischen Verstärkung eine Dimension (Ir1, Ir2) in einer Längsrichtung (Y) an den Innenflächen (104) und Außenflächen (106) des Blatts (102) zwischen der Anström- (108) und Abströmkante (110) aufweist, die zwischen 15 % und 35 % eines Seils (C) an dem Längsende des Blatts vor der Anschlussausrundung (120) liegt.

7. Schaufel (100) aus Verbundmaterial nach einem der Ansprüche 4 bis 6, wobei eine Dimension (er) der zweiten metallischen Verstärkung (126, 128, 130, 132) nach der Längsrichtung (X) des Blatts (102) zwischen 30 % und 70 % einer Dimension (ep) der Plattform (112, 114) nach der Richtung liegt.

8. Schaufel (100) aus Verbundmaterial nach einem der Ansprüche 4 bis 7, wobei eine Dimension (Lr) der zweiten metallischen Verstärkung (126, 128, 130, 132) in einer Richtung orthogonal zu der Längsrichtung (X) des Blatts (102) und zu der Längsrichtung (Y) an den Innenflächen (104) und Außenflächen (106) des Blatts zwischen der Anström-(108) und Abströmkante (110) mindestens gleich einer Dimension der Plattform (112, 114) in der Richtung ist.

9. Schaufel (100) aus Verbundmaterial nach einem der Ansprüche 4 bis 8, wobei die Plattform (112) eine dem Gleichrichter in Bezug auf eine Achse des Gleichrichters radial interne Plattform ist, und wobei die zweite metallische Verstärkung (128) an einem Längsende gegenüber der Abströmkante (110) des Blatts (102) eine Ausstülpung (134) umfasst, die sich orthogonal zu der Plattform erstreckt.

10. Schaufel (100) aus Verbundmaterial nach einem der Ansprüche 4 bis 9, wobei die zweite metallische Verstärkung (126, 128, 130, 132) aus Titan gefertigt ist.

## Claims

1. A method for manufacturing a vane (100) made of composite material for a turbomachine, in particular for an aircraft, comprising the steps of:
- weaving (S10) fibres in three dimensions so as to produce a fibrous preform,
- mounting (S20) the fibrous preform in a mould,
- injecting (S30), in the mould, a resin, in order to impregnate the fibrous preform,
- polymerizing (S40) the resin so as to form the vane (100), said vane comprising a blade (102) having a pressure face (104) and a suction face (106) extending between a leading edge (108) and a trailing edge (110), a longitudinal end of said blade being connected to a platform (112, 114), the platform comprising pressure (116) and suction (118) segments connected to said blade by a connection fillet (120), and a separation (122) being formed in said fibrous preform between said pressure and suction segments of the platform,
- reinforcing (S50) the leading edge of said blade, by integrating a first metallic reinforcement (124) on the leading edge of the blade,
**characterised in that** the method also comprises the step of:
- reinforcing (S60) the connection fillets, by integrating a second metallic reinforcement (126, 128, 130, 132) on at least one portion of the pressure and suction segments of the platform and in the separation.

2. The manufacturing method according to claim 1, wherein the step of adding the second metallic reinforcement (126, 128, 130, 132) consists of bonding the second metallic reinforcement to at least one portion of the pressure (116) and suction (118) segments of the platform and in the separation (122).

3. The manufacturing method according to claim 1, wherein the step of adding the second metallic reinforcement (126, 128, 130, 132) consists of co-injecting the second metallic reinforcement onto at least one portion of the pressure (116) and suction (118) segments of the platform and into the separation (122).

4. A vane (100) made of composite material for a turbomachine, in particular for an aircraft, comprising a blade (102) having a pressure face (104) and a suction face (106) extending between a leading edge (108) and a trailing edge (110), the blade being produced from a fibrous preform weaved in three dimensions, a longitudinal end of said blade being connected to a platform (112, 114), the platform comprising pressure (116) and suction (118) segments connected to said blade by a connection fillet (120), a separation (122) being formed in said fibrous preform between said pressure and suction segments of the platform, the vane comprising a first metallic reinforcement (124) on the leading edge (108) of the blade, the blade being **characterised in that** the blade comprises a second metallic reinforcement (126, 128, 130, 132) on at least one portion of the pressure (116) and suction (118) segments of the platform (112) and in the separation (122).

5. The composite material vane (100) according to claim 4, wherein a dimension of the second metallic reinforcement (126, 128) in a longitudinal direction (Y) to the pressure (104) and suction (106) faces of the blade (102) between the leading (108) and trailing (110) edges is substantially equal to a dimension (lp) of the platform (112, 114) in said direction.

6. The vane (100) of composite material according to claim 4, wherein the second metallic reinforcement comprises two portions (130, 132), each portion of the second metallic reinforcement having a dimension (Ir1, Ir2) in a longitudinal direction (Y) to the pressure (104) and suction (106) faces of the blade (102) between the leading (108) and trailing (110) edges of between 15% and 35% of a chord (C) at the longitudinal end of the blade prior to the connection fillet (120).

7. The vane (100) made of composite material according to one of claims 4 to 6, wherein a dimension (er) of the second metallic reinforcement (126, 128, 130, 132) in the longitudinal direction (X) of the blade (102) is between 30% and 70% of a dimension (ep) of the platform (112, 114) in said direction.

8. The vane (100) of composite material according to one of claims 4 to 7, wherein a dimension (Lr) of the second metallic reinforcement (126, 128, 130, 132) in a direction orthogonal to the longitudinal direction (X) of the blade (102) and to the longitudinal direction (Y) of the pressure (104) and suction (106) faces of the blade between the leading (108) and trailing (110) edges is at least equal to a dimension of the platform (112, 114) in said direction.

9. The vane (100) made of composite material according to one of claims 4 to 8, wherein the platform (112) is a platform radially internal to the stator vane with respect to an axis of said stator vane, and in which the second metallic reinforcement (128) comprises, at a longitudinal end facing the trailing edge (110) of the blade (102), a protuberance (134) extending orthogonally to said platform.

10. The vane (100) of composite material according to any of claims 4 to 9, wherein the second metallic reinforcement (126, 128, 130, 132) is made of titanium.
